# EUROPEAN PATENT SPECIFICATION

(11) **EP 2 925 078 B1**
(45) Date of publication and mention of the grant of the patent: **19.09.2018**
(21) Application number: 13857313.4
(22) Date of filing: 15.11.2013
(51) Int. Cl.: H04W 76/30

(54) **LOCAL IP ACCESS CONNECTION RELEASE METHOD AND MRN**
VERFAHREN FÜR VERBINDUNGSAUFLÖSUNG EINES LOKALEN IP-ZUGANGS UND MRN
PROCÉDÉ DE LIBÉRATION DE CONNEXION À ACCÈS IP LOCAL ET NOEUD DE RELAIS MOBILE (MRN)

(30) Priority: 21.11.2012 CN 201210476839
(43) Date of publication of application: 30.09.2015
(73) Proprietor: ZTE Corporation, Shenzhen, Guangdong 518057 (CN)
(72) Inventor: HUANG, Ying, Shenzhen Guangdong 518057 (CN); XIE, Feng, Shenzhen Guangdong 518057 (CN); LIANG, Shuang, Shenzhen Guangdong 518057 (CN)
(74) Representative: Brevalex
(86) International application number: PCT/CN2013/087278
(87) International publication number: WO 2014/079342

(56) References cited:
- WO-A2-2012/093886
- WO-A2-2012/100199
- CN-A- 102 076 038
- CN-A- 102 098 723
- CN-A- 102 300 336
- US-A1- 2012 182 912

## Description

### TECHNICAL FIELD

The disclosure relates to the field of communications technologies, and particularly to a method for releasing a local IP access connection and a Mobile Relay Node (MRN).

### BACKGROUND

In a Wireless Relay (WR) technology in a long Term Evolution-Advanced (LTE-Advanced) standards formulated by a 3rd Generation Partnership Project (3GPP) standard organization, a Relay Node (RN) provides functions and services to a User Equipment (UE), which are similar to those provided by an ordinary evolved NodeB (eNB), and accesses a serving eNB (a donor eNB, DeNB for short) via a wireless interface in a manner similar to an ordinary UE.

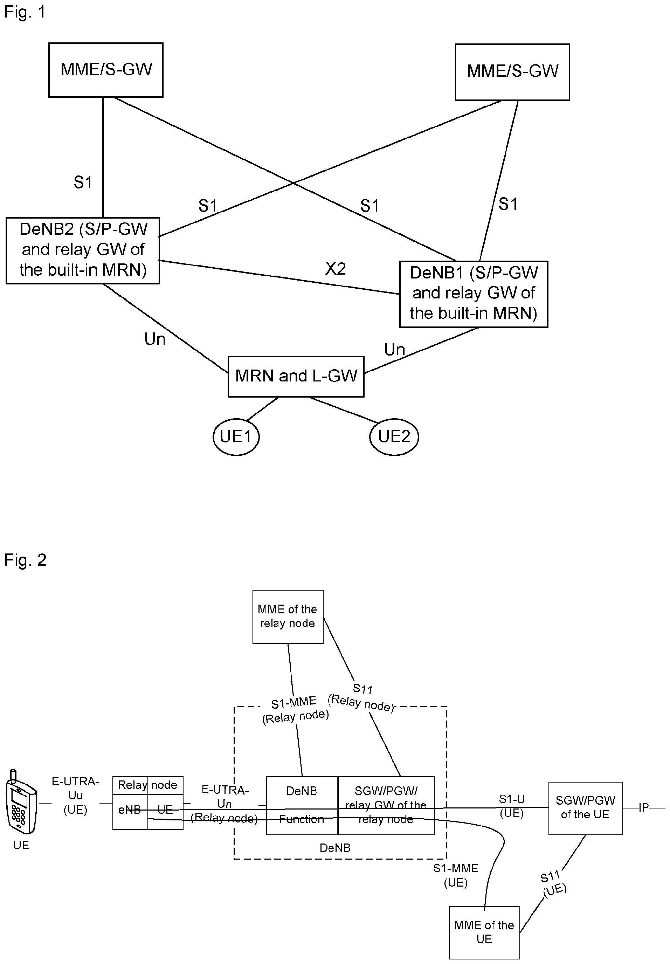

With large-scale construction and operation of the high-speed railways, demands for communications on trains are constantly increasing. However, since the high-speed moving train is subject to the Doppler frequency shift, frequency cell handover, and great penetration loss of train carriages, in the existing network, coverage of eNBs fails to accommodate requirements on the communication quality of the high-speed railway. Therefore, in the industry, a solution where relay nodes are deployed along the high-speed railway is proposed. Such relay node is generally referred to as a Mobile Relay (MR). As shown in Fig. 1, Fig. 1 is a schematic architectural diagram of a mobile relay system supporting an LIPA function in a high-speed railway scenario. With the mobile relay technology, users (UE1 and UE2) on the train on the high-speed railway communicate with relatively static Mobile Relay Nodes (MRNs), and the MRN may be handed over between different DeNBs during moving of the train on the high-speed railway, thereby preventing concurrent handover of a large number of users in the carriages of the train, and ensuring the communication quality between the UE and the MRN. In addition, a series of problems present for the high-speed railway may be better solved by enhancing backbone connections between the MRN and the DeNB.

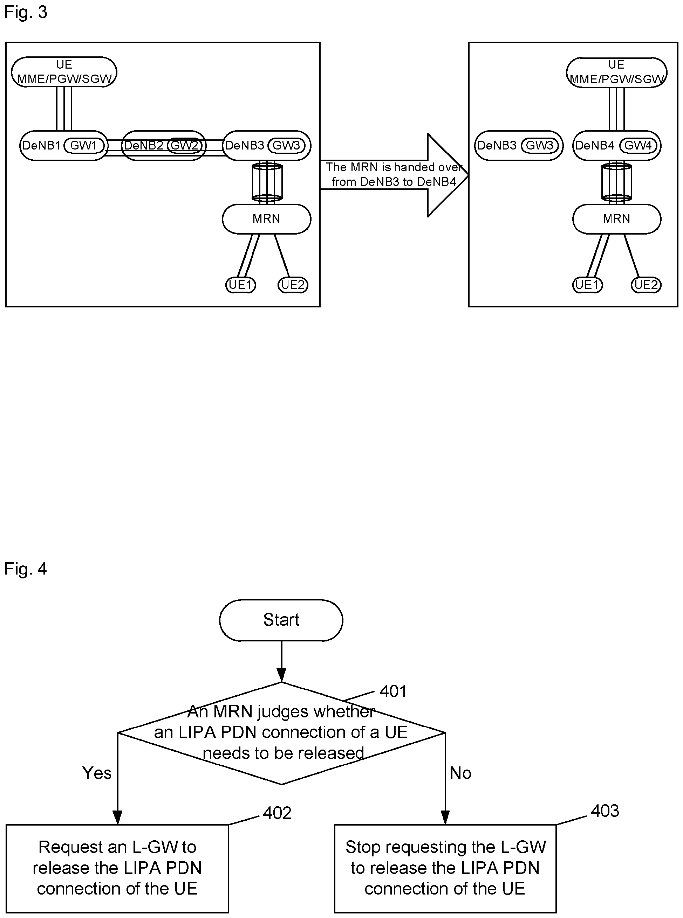

The mobile relay may employ the architecture (that is, the architecture which is the same as the standardized R10 fix relay, generally referred to as architecture 2) as shown in Fig. 2. In this case, a Serving GateWay (S-GW), a Packet data network GateWay (P-GW), and a relay GateWay (relay GW) of the MRN (the S-GW, the P-GW, and the relay GW are uniformly referred to as GWs) are deployed on an initially accessed DeNB (referred to as initial DeNB). The relay GW of the DeNB provides a function of providing proxy for S1 and X2 data and signaling. Under such architecture, when the MRN moves to be far away from the initial DeNB, UE data firstly arrives at the initial DeNB, and are routed to a serving DeNB, with a long path and a great delay. Therefore, a route optimization solution may be considered. When the MRN moves to be far away from the initial DeNB, the GW of the MRN is replaced by a built-in gateway serving the DeNB of the MRN. As shown in Fig. 3, before switching of the MRN, the GW is located on a DeNB 1, and the MRN is served by an evolved NodeB of a DeNB 3, the UE data firstly arrives at the GW of the DeNB 1, and then arrives at an evolved NodeB of a DeNB 3 via routing by a DeNB 2. In the handover process, the MRN may relocate the GW to the GW built in a DeNB 4, such that the UE data may directly arrive at the DeNB 4, thereby shortening the path and reducing the data transmission delay.

In addition, to better accommodate user requirements and further improve user experience, the 3GPP considers that the mobile relay supports the LIPA function to provide a high-speed local service for the LTE UE, and save the air interface backhaul link bandwidth resources. For example, the UE may connect to a local Packet Data Network (PDN) to acquire a multimedia resource via a local gateway (L-GW) integrally deployed in the MRN, or support multi-user social networking applications, for example, file sharing, chatting, gaming, or the like, via a local server. As shown in Fig. 1, an L-GW function entity may be built in the MRN in the carriage of the train. The L-GW is connected to the PND via an SGi interface. With respect to a connected UE having an LIPA connection, a direct tunnel is present between the L-GW and the MRN for LIPA service data, and the L-GW in the MRN establishes an S5 interface core network tunnel with the S-GW of the UE via the DeNB, for paging and S5 signaling transmission for an idle UE.

According to the current protocol specifications, mobility of the LIPA connection is not supported. In a scenario of a Home evolved NodeB (HeNB), if a UE which is using the LIPA service moves out of the HeNB, the HeNB, before initiating a handover process for the UE, needs to trigger the L-GW, via an internal signaling, to initiate an LIPA connection release process. In addition, in the S1/X2 handover process, a Mobility Management Entity (MME) needs to check whether there is an unreleased LIPA PDN connection. Specifically, in the X2 handover process, after receiving a path switch request message, if the MME determines that there is an unreleased LIPA connection, the MME sends a path switch request failure message and detaches the UE. In a scenario where the MRN supports the LIPA function, if the above route optimization solution is employed, the MRN needs to initiate a path switch request process for the UE to update a downlink S1 path of the S-GW of the UE, wherein this process will cause detachment of the UE and release of the LIPA connection. In a scenario of high-speed railways, if the UE is not moving relative to the MRN, the UE is still served by the same MRN and L-GW. In this case, the LIPA PDN connection of the UE does not need to be released in the handover process (the path switch request process). Therefore, in the scenario where the mobile relay supports the LIPA function, the problem of release of the LIPA connection needs to be solved.

In document WO 2012/093886 A2, a method and apparatus for verifying a release of a local IP access (LIPA) packet data network (PDN) connection in a wireless communication system in provided. A mobility management entity (MME) receives a handover preparation message from a source home eNodeB (HeNB), verifying whether the LIPA PDN connection has been released or not on receiveing the handover preparation message. If the LIPA PDN connection has been released already, the MME performs a normal handover procedure. If the LIPA PDN connection has not been released, the MME transmits a handover preparation failure message to the source HeNB.

### SUMMARY

In view of above, embodiments of the disclosure are mainly intended to provide a method for releasing a local IP access connection and an MRN, so as to solve the problem of release of the LIPA connection in the scenario where the mobile relay supports the LIPA.

To this end, the technical solutions of the disclosure are implemented as follows:
An embodiment of the disclosure provides a method for releasing a local IP access connection, which includes:
judging, by a Mobile Relay Node (MRN), whether a Local IP Access Packet Data Network (LIPA PDN) connection of a User Equipment (UE) needs to be released; if the LIPA PDN connection needs to be released, then requesting a Local GateWay (L-GW) to release the LIPA PDN connection of the UE; and if the LIPA PDN connection does not need to be released, then stopping requesting the L-GW to release the LIPA PDN connection of the UE.

The judging, by an MRN, whether an LIPA PDN connection of a UE needs to be released may include:
judging, by the MRN, whether the UE is in a process of handover from a cell under an evolved NodeB to a cell under the MRN; if the UE is in the process of handover from a cell under an evolved NodeB to a cell under the MRN, then determining that the LIPA PDN connection of the UE needs to be released; otherwise, then determining that the LIPA PDN connection of the UE does not need to be released.

The method may further include: after judging, by an MRN, whether an LIPA PDN connection of a UE needs to be released,
initiating, by the MRN, a path switch request procedure for the UE, and sending a first path switch request message to a donor evolved NodeB, wherein the first path switch request message does not indicate a judgment result indicating whether the LIPA PDN connection of the UE needs to be released;
after receiving the first path switch request message, sending, by the donor evolved NodeB, a second path switch request message to a mobility management entity; and
sending, by the mobility management entity, an S11 interface message to a serving gateway of the UE, wherein the S11 interface message may be a modifying bearer request message or a creating session request message.

The method may further include: after judging, by an MRN, whether an LIPA PDN connection of a UE needs to be released,
initiating, by the MRN, a path switch request procedure for the UE, and sending an LIPA connection release judgment indication via a third path switch request message;
after receiving the third path switch request message, if the third path switch request message inxludes the LIPA connection release judgment indication, sending, by the donor evolved NodeB, the third path switch request message to a mobility management entity via a fourth path switch request message; and
judging, by the mobility management entity according to the LIPA connection release judgment indication, whether the LIPA PDN connection of the UE needs to be released.

The judging, by the mobility management entity according to the LIPA connection release judgment indication, whether the LIPA PDN connection of the UE needs to be released may include:
if the LIPA connection release judgment indication received by the mobility management entity indicates that the LIPA PDN connection of the UE needs to be released, then determining that the LIPA PDN connection of the UE needs to be released; and
if the LIPA connection release judgment indication received by the mobility management entity indicates that the LIPA PDN connection of the UE does not need to be released or if the the mobility management entity does not receive the LIPA connection release judgment indication, then determining that the LIPA PDN connection of the UE does not need to be released.

The method may further include: after judging, by the mobility management entity according to the LIPA connection release judgment indication, whether the LIPA PDN connection of the UE needs to be released,
if the UE has an unreleased LIPA PDN connection and the mobility management entity judges that the LIPA PDN connection of the UE needs to be released, then denying, by the mobility management entity, the path switch request, and detaching the UE; and
if the UE has an unreleased LIPA PDN connection and the mobility management entity judges that the LIPA PDN connection of the UE does not need to be released, then sending, by the mobility management entity, an S11 interface message to a serving gateway of the UE, wherein the S11 interface message may be a modifying bearer request message or a creating session request message.

Wherein building the L-GW in the MRN.

An embodiment of the disclosure further provides a Mobile Relay Node (MRN), which includes:
a judging module, configured to judge whether a Local IP Access Packet Data Network (LIPA PDN) connection of a User Equipment (UE) needs to be released; and
an executing module, configured: when the judging module judges that the LIPA PDN connection of the UE needs to be released, to request a Local GateWay (L-GW) to release the LIPA PDN connection of the UE; and when the judging module judges that the LIPA PDN connection of the UE does not need to be released, to stop requesting the L-GW to release the LIPA PDN connection of the UE.

The judging module may be further configured: to judge whether the UE is in a process of handover from a cell under an evolved NodeB to a cell under the MRN; if the UE is in the process of handover from a cell under an evolved NodeB to a cell under the MRN, to determine that the LIPA PDN connection of the UE needs to be released; otherwise, to determine that the LIPA PDN connection of the UE does not need to be released.

The MRN may further include: a path switch request sending module, configured: after the judging module judges whether the LIPA PDN connection of the UE needs to be released, to initiate a path switch request procedure for the UE, and to send a first path switch request message to a donor evolved NodeB; wherein the first path switch request message does not indicate a judgment result indicating whether the LIPA PDN connection of the UE needs to be released;
correspondingly, after receiving the first path switch request message, the donor evolved NodeB is configured to send a second path switch request message to a mobility management entity; and
the mobility management entity is configured to send an S11 interface message to a serving gateway of the UE, wherein the S11 interface message may be a modifying bearer request message or a creating session request message.

The MRN may further include: a path switch request sending module, configured: when the judging module judges whether the LIPA PDN connection of the UE needs to be released, to initiate a path switch request procedure for the UE, and to send an LIPA connection release judgment indication via a third path switch request message;
correspondingly, after receiving the third path switch request message, if the third path switch request message includes the LIPA connection release judgment indication, the donor evolved NodeB is configured to send the third path switch request message to a mobility management entity via a fourth path switch request message; and
the mobility management entity is configured to judge, according to the LIPA connection release judgment indication, whether the LIPA PDN connection of the UE needs to be released.

The L-GW may be built in the MRN.

Embodiments of the disclosure provide a method for releasing a local IP access connection and an MRN. The MRN judges whether an LIPA PDN connection of a UE needs to be released; if the LIPA PDN connection needs to be released, the MRN request an L-GW to release the LIPA PDN connection of the UE; and if the LIPA PDN connection does not need to be released, the MRN stops requesting the L-GW to release the LIPA PDN connection of the UE. According to the disclosure, the problem of release of the LIPA connection in the scenario where the mobile relay supports the LIPA is solved, continuity of the LIPA connection of the MRN in the handover process is ensured in the scenario where the mobile relay supports the LIPA, thereby further ensuring the LIPA service continuity of the UE and improving quality of service and user experience for the user.

### BRIEF DESCRIPTION OF THE DRAWINGS

Fig. 1 is a schematic architectural diagram of a mobile relay system supporting an LIPA function in a high-speed railway scenario;
Fig. 2 is a schematic architectural diagram of an R10 fix relay system;
Fig. 3 is a schematic diagram of a router optimization solution under a circumstance where a mobile relay employs the architecture of the R10 fix relay system;
Fig. 4 is a flowchart of a method for releasing a local IP access connection according to an embodiment of the disclosure;
Fig. 5 is a flowchart of a method for releasing a local IP access connection according to a first embodiment of the disclosure;
Fig. 6 is a flowchart of a method for releasing a local IP access connection according to a second embodiment of the disclosure;
Fig. 7 is a flowchart of a method for releasing a local IP access connection according to a third embodiment of the disclosure;
Fig. 8 is a flowchart of a method for releasing a local IP access connection according to a fourth embodiment of the disclosure; and
Fig. 9 is a schematic structural diagram of an MRN according to an embodiment of the disclosure.

### DETAILED DESCRIPTION

The technical solutions of the disclosure are further described in detail with reference to the drawings and specific embodiments.

An embodiment of the disclosure provides a method for releasing a local IP access connection. As shown in Fig. 4, the method mainly includes the following steps.
Step 401: An MRN judges whether an LIPA PDN connection of a UE needs to be released; if the LIPA PDN connection needs to be released, step 402 is performed; and if the LIPA PDN connection does not need to be released, step 403 is performed.
Step 402: The MRN requests an L-GW to release the LIPA PDN connection of the UE.
Step 403: The MRN does not request the L-GW to release the LIPA PDN connection of the UE.

The judging, by an MRN, whether an LIPA PDN connection of a UE needs to be released includes:
judging, by the MRN, whether the UE is in a process of handover from a cell under an evolved NodeB to a cell under the MRN, if yes, then determining that the LIPA PDN connection of the UE needs to be released, otherwise, then determining that the LIPA PDN connection of the UE does not need to be released.
after the judging, by an MRN, whether an LIPA PDN connection of a UE needs to be released, the method further includes:
   initiating, by the MRN, a path switch request procedure for the UE, and sending a first path switch request message to a donor evolved NodeB (DeNB), wherein the first path switch request message does not indicate a judgment result indicating whether the LIPA PDN connection of the UE needs to be released;
   after receiving the first path switch request message, sending, by the donor evolved NodeB, a second path switch request message to a Mobility Management Entity (MME); and
   sending, by the mobility management entity, an S11 interface message to a serving gateway of the UE, wherein the S11 interface message is a modifying bearer request message or a creating session request message.

After the judging, by an MRN, whether an LIPA PDN connection of a UE needs to be released, the method further includes:
initiating, by the MRN, a path switch request procedure for the UE, and sending an LIPA connection release judgment indication via a third path switch request message;
after receiving the third path switch request message, if the third path switch request message includes the LIPA connection release judgment indication, then sending, by the donor evolved NodeB, the third path switch request message to a mobility management entity via a fourth path switch request message; and
judging, by the mobility management entity according to the LIPA connection release judgment indication, whether the LIPA PDN connection of the UE needs to be released.

The LIPA connection release judgment indication sent via the third path switch request message may be indicated in an explicit manner or in an implicit manner.

The judging, by the mobility management entity according to the LIPA connection release judgment indication, whether the LIPA PDN connection of the UE needs to be released includes:
if the LIPA connection release judgment indication received by the mobility management entity indicates that the LIPA PDN connection of the UE needs to be released, then determining that the LIPA PDN connection of the UE needs to be released; and
if the LIPA connection release judgment indication received by the mobility management entity indicates that the LIPA PDN connection of the UE does not need to be released or if the mobility management entity does not receive the LIPA connection release judgment indication, then determining that the LIPA PDN connection of the UE does not need to be released.

After the judging, by the mobility management entity according to the LIPA connection release judgment indication, whether the LIPA PDN connection of the UE needs to be released, the method further includes:
if the UE has an unreleased LIPA PDN connection and the mobility management entity judges that the LIPA PDN connection of the UE needs to be released, then denying, by the mobility management entity, the path switch request, and detaching the UE; and
if the UE has an unreleased LIPA PDN connection and the mobility management entity judges that the LIPA PDN connection of the UE does not need to be released, then sending, by the mobility management entity, an S11 interface message to a serving gateway of the UE, wherein the S11 interface message is a modifying bearer request message or a creating session request message.

Preferably, the L-GW is built in the MRN.

The disclosure is further described in detail with reference to the specific embodiments.

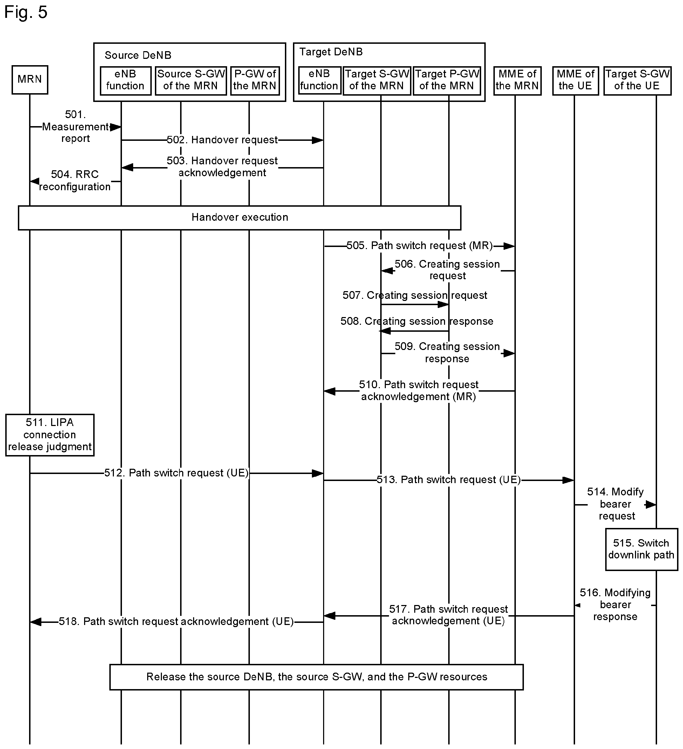

The first embodiment of the disclosure describes a method for an MRN to judge whether to release an LIPA PDN connection of a UE in the case of relocation of a GW of the MRN during an X2 handover process of the MRN. Fig. 5 describes the process of this embodiment. In this embodiment, a source S-GW and a source P-GW of the MRN may be built in a source DeNB, or may not be deployed in the source DeNB but built in an initial DeNB. The process of this embodiment mainly includes the following steps.
Step 501: An MRN detects a signal of a target DeNB cell during a measurement process, and triggers a measurement report event to send a measurement report to a source DeNB.
Step 502: The source DeNB determines to hand over the MRN to the target DeNB, and judges that an X2 interface is present between the source DeNB and the target DeNB, and the MRN upon handover does not need switchover of an MME. In this case, the source DeNB initiates an X2 handover for the MRN. The source DeNB sends an X2 interface handover request message to the target DeNB. The handover request message includes context information of the MRN and a UE.
Step 503: The target DeNB receives the handover request message, creates context for the MRN and the UE and reserves related bearer resources, and then sends an X2 interface handover request acknowledgement message to the source DeNB.
Step 504: The source DeNB sends an air interface message, that is, a Radio Resource Control (RRC) connection reconfiguration message to the MRN, wherein the RRC connection reconfiguration message includes a handover command message that is sent from the target DeNB to the MRN via the source DeNB for transparent transmission.
Step 505: In the handover execution stage, the MRN is detached from the DeNB and is synchronized with the target DeNB and establishes an RRC connection with the target DeNB. After receiving an RRC reconfiguration complete message sent from the MRN, the target DeNB sends a path switch request message to the MME of the MRN to update paths of S1 user plane and control plane of the MRN. The message includes addresses of the S-GW and the P-GW (target S-GW/P-GW of the MRN) of the target DeNB, to assist the MME to relocate the S-GW and the P-GW of the MRN.
Step 506: The MME of the MRN relocates the S-GW and the P-GW of the MRN as the S-GW and the P-GW built in the target DeNB according to the addresses of the target S-GW/P-GW sent from the target DeNB. The MME of the MRN sends a creating session request to the S-GW of the DeNB, which includes EPS bearer information and an address of the target P-GW (which is a P-GW built in the target DeNB) of the MRN to be created.
Step 507: The target S-GW creates the context of the MRN, and sends a creating session request message to the target P-GW.
Step 508: The target P-GW creates the context and the EPS bearer of the MRN, and sends a creating session response message to the target S-GW.

The signalings in steps 507 and 508 are both an internal interface message of the target DeNB.
Step 509: The target S-GW sends the creating session response message to the MME of the MRN, to acknowledge that the context and the EPS bearer of the MRN have been established.
Step 510: The MME of the MRN sends a path switch request acknowledgement message to the target DeNB.
Step 511: The MRN judges, according to whether context of the E-UTRAN wireless access bearer (E-RAB) of the UE includes a correlation ID, whether the US has an LIPA PDN connection. If the UE has an LIPA PDN connection, then the MRN needs to judge whether the LIPA PDN connection needs to be released. To be specific, the MRN judges whether the UE is in a process of switching from a cell under an evolved NodeB to a cell under the MRN, if yes, the MRN determines that the LIPA PDN connection of the UE needs to be released, otherwise, the MRN determines that the LIPA PDN connection of the UE does not need to be released. If the MRN determines that the LIPA PDN connection of the UE needs to be released, then the MRN requests the built-in L-GW to release the LIPA PDN connection of the UE via an internal signaling. Then the L-GW performs a bearer deactivation process initiated by a PDN GW.
Step 512: The MRN sends a path switch request message to the target DeNB with respect to each UE, to update paths of the S1 user plane and control plane of the UE, which includes bearer information that needs to be switched in the downlink.
Step 513: The target DeNB performs an S1 proxy for the received path switch request message with respect to each UE, and then sends the message to the MME of the UE.
Step 514: In this embodiment, if the MME of the UE judges that it is no need to reselect an S-GW for the UE, the target S-GW of the UE as shown in Fig. 5 is also the source S-GW of the UE, and the MME of the UE sends a modifying bearer request message, with respect to each PDN connection of the UE, to the target S-GW of the UE.

If the MME of the UE needs to reselect an S-GW, the target S-GW of the UE and the source S-GW of the UE as shown in Fig. 5 are different S-GWs, and the MME of the UE sends a creating session request message to the target S-GW of the UE with respect to each PDN connection.
Step 515: The target S-GW of the UE updates an IP address of a downlink S1 connection peer end and TEID information of a GTP tunnel, and may assign a new GTP TEID to implement switch of an S1 downlink path.
Step 516: The target S-GW of the UE sends a modifying bearer response message to the MME.
Step 517: The MME sends a path switch request acknowledgement message to the target DeNB with respect to the UE.
Step 518: The target DeNB sends the path switch request acknowledgement message with respect to the UE to the MRN, to acknowledge completion of the S1 downlink path switching.

Then the related resources of the source DeNB, and the MRs of the source S-GW and source P-GW may be released.

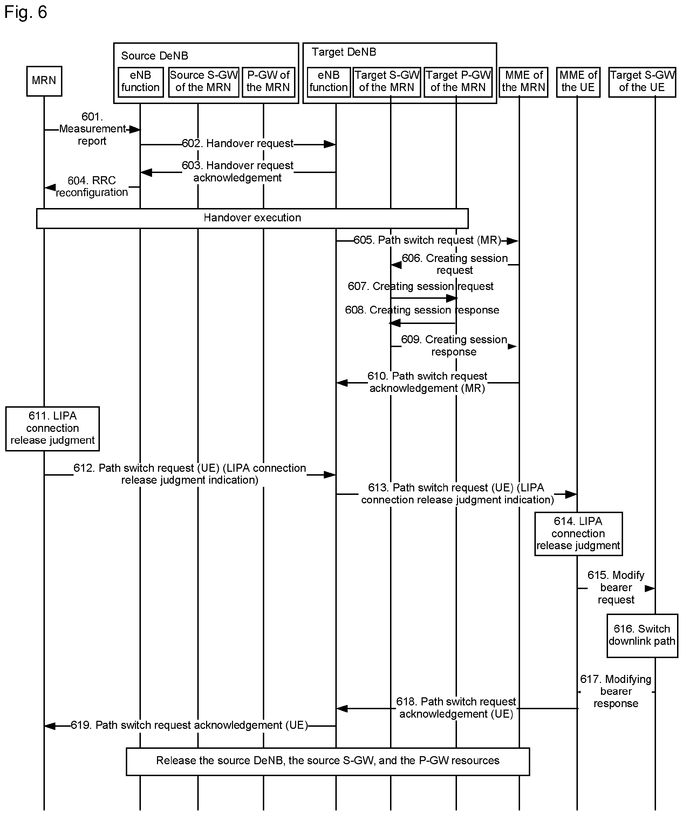

The second embodiment of the disclosure describes a method for an MRN to judge whether to release an LIPA PDN connection of a UE and send an indication to an MME in the case of relocation of a GW of the MRN during an X2 handover process of the MRN. Fig. 6 describes the process of this embodiment. In this embodiment, a source S-GW and a source P-GW of the MRN may be built in a source DeNB, or may not be deployed in the source DeNB but built in an initial DeNB. The process of this embodiment mainly includes the following steps.
Steps 601 to 611 are the same as steps 501 to 511, which are thus not described herein any further.
Step 612: The MRN sends a path switch request message to the target DeNB with respect to each UE, to update paths of the S1 user plane and control plane of the UE, which includes bearer information that needs to be switched in the downlink. The MRN may send an LIPA connection release judgment indication via the path switch request message. The LIPA connection release judgment indication is used for instructing whether the LIPA PDN connection needs to be released.
Step 613: The target DeNB performs an S1 proxy for the received path switch request message with respect to each UE, and then sends the message to the MME of the UE. If the path switch request message received by the target DeNB includes the LIPA connection release judgment indication, the path switch request message sent from the target DeNB to the MME also includes the LIPA connection release judgment indication.
Step 614: If the UE has an LIPA PDN connection, the MME judges whether the LIPA PDN connection needs to be released. If the LIPA connection release judgment indication received by the MME indicates that the LIPA PDN connection of the UE needs to be released, then it is determined that the LIPA PDN connection of the UE needs to be released, and the MME may deny the path switch request and detach the UE. If the LIPA connection release judgment indication received by the MME indicates that the LIPA PDN connection of the UE does not need to be released or the MME has not received the LIPA connection release judgment indication, then it is determined that the LIPA PDN connection of the UE does not need to be released, and thus the subsequent path switch process is continuously performed.
Steps 615 to 619 are the same as steps 514 to 518, which are thus not described herein any further.

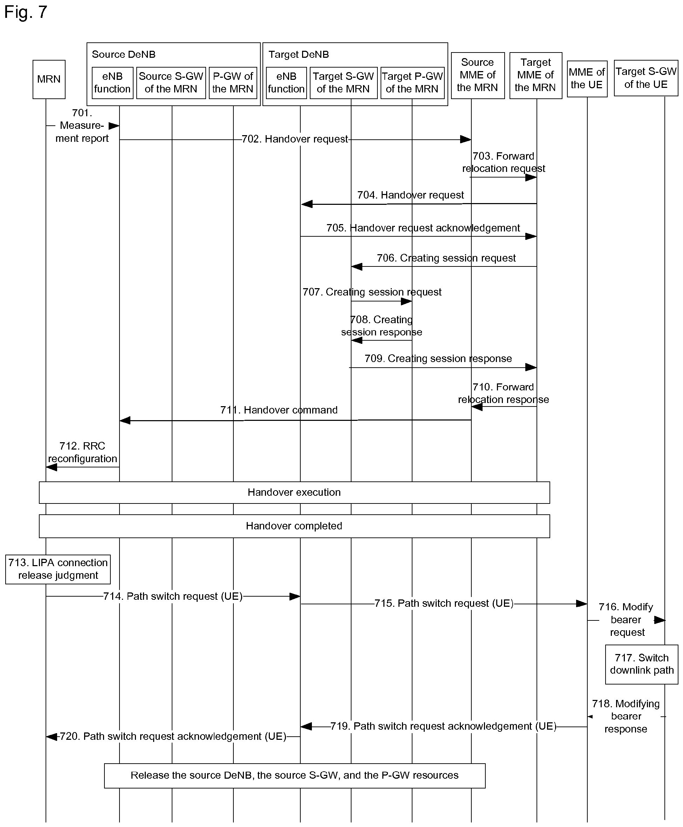

The third embodiment of the disclosure describes a method for an MRN to judge whether to release an LIPA PDN connection of a UE in the case of relocation of a GW of the MRN during an S2 handover process of the MRN. Fig. 7 describes the process of this embodiment. In this embodiment, a source S-GW and a source P-GW of the MRN may be built in a source DeNB, or may not be deployed in the source DeNB but built in an initial DeNB. The process of this embodiment mainly includes the following steps.
Step 701: An MRN detects a signal of a target DeNB cell during a measurement process, and triggers a measurement report event to send a measurement report to a source DeNB.
Step 702: The source DeNB determines to hand over the MRN to the target DeNB, and judges that an X2 interface is not present between the source DeNB and the target DeNB, or the MRN upon handover needs switchover of an MME. In this case, the source DeNB initiates an S1 handover for the MRN. The source DeNB sends an S1 interface handover required message to a source MME of the MRN.
Step 703: The source MME judges, according to an evolved NodeB identifier of the target DeNB or a target TAI included in the received handover required message, whether to select a new MME. If yes, then a target MME is selected according to these two parameters, and a relocation request message is forwarded to the target MME, wherein the message includes a container for transparent transmission from a source evolved NodeB to a target evolved NodeB, a target evolved NodeB identifier, a target location area identifier, context information of the MRN, and the like.

If no new MME needs to be selected, steps 703 and 710 are skipped.
Step 704: The target MME of the MRN sends an S1 interface handover request message to the target DeNB, wherein the message includes information of the E-RAB requested for establishment, the container for transparent transmission from the source evolved NodeB to the target evolved NodeB, and the like.
Step 705: The target DeNB creates context for the MRN and UE and reserves resources for the bearer of the MRN, and then sends a handover request acknowledgement message to the target MME of the MRN. The message may include IP addresses of a target S-GW and a target P-GW on the target DeNB, to assist the target MME to relocate the S-GW and the P-GW of the MRN.
Step 706: The target MME of the MRN relocates the S-GW and P-GW of the MRN as the S-GW and P-GW built in the target DeNB according to the addresses of the target S-GW/P-GW sent from the target DeNB. The MME of the MRN sends a creating session request to the S-GW of the DeNB, which includes EPS bearer information and an address of the target P-GW (which is a P-GW built in the target DeNB) of the MRN to be created.
Step 707: The target S-GW creates context of the MRN, and sends a creating session request message to the target P-GW.
Step 708: The target P-GW creates the context and the EPS bearer of the MRN, and sends a creating session response message to the target S-GW. The signalings in steps 707 and 708 are both an internal interface message of the target DeNB.
Step 709: The target S-GW sends the creating session response message to the MME of the MRN, to acknowledge that the context and the EPS bearer of the MRN have been established.
Step 710: The target MME of the MRN sends a forward relocation response message to the source MME.
Step 711: The source MME of the MRN sends a handover command message to the source DeNB.
Step 712: The source DeNB sends an RRC reconfiguration message to the MRN, to indicate that the MRN is in a handover execution stage. In this case, the MRN may be detached from the source DeNB and establish an RRC connection with the target DeNB.
Steps 713 to 720 are the same as steps 511 to 518, which are thus not described herein any further.

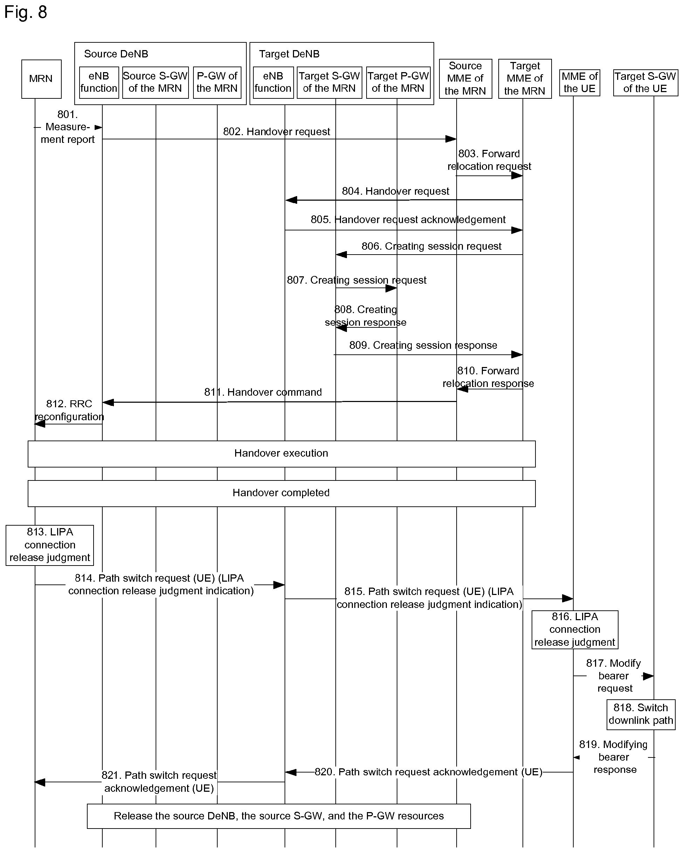

The fourth embodiment of the disclosure describes a method for an MRN to judge whether to release an LIPA PDN connection of a UE and send an indication to an MME in the case of relocation of a GW of the MRN during an S1 handover process of the MRN. Fig. 8 describes the process of this embodiment. In this embodiment, a source S-GW and a source P-GW of the MRN may be built in a source DeNB, or may not be deployed in the source DeNB but built in an initial DeNB.

This embodiment differs from the third embodiment in that, in this embodiment, after the MRN judges whether an LIPA PDN connection needs to be released, the MRN sends an LIPA connection release judgment indication to the MME via the target DeNB, and the MME may judge, according to the LIPA connection release judgment indication, whether the LIPA PDN connection of the UE needs to be released. However, in the third embodiment, the MME does not check whether the LIPA PDN connection of the UE needs to be released.

Steps 801 to 812 are the same as steps 701 to 712, and steps 813 to 821 are the same as steps 611 to 619, which are thus not described herein any further.

It should be noted that the embodiments as shown in Fig. 7 and Fig. 8 are likewise applicable to a scenario where the MME of the MRN is changed in the handover process. If the MME is not changed, messages transmitted between all the source MMEs and the target MMEs may be omitted, and behaviors of the source MME and the target MME are those of one MME.

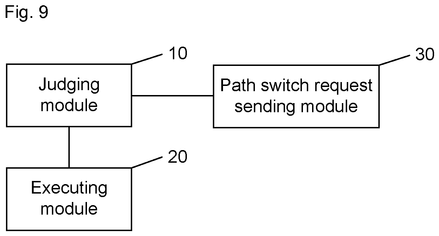

An embodiment of the disclosure further provides an MRN. As shown in Fig. 9, the MRN includes:
a judging module 10, configured to judge whether an LIPA PDN connection of a UE needs to be released; and
an executing module 20, configured: when the judging module 10 judges that the LIPA PDN connection of the UE needs to be released, to request an L-GW to release the LIPA PDN connection of the UE; and when the judging module 10 judges that the LIPA PDN connection of the UE does not need to be released, to stop requesting the L-GW to release the LIPA PDN connection of the UE.

Preferably, the judging module 10 is further configured: to judge whether the UE is in a process of handover from a cell under an evolved NodeB to a cell under the MRN; if yes, to determine that the LIPA PDN connection of the UE needs to be released; otherwise, to determine that the LIPA PDN connection of the UE does not need to be released.

As a preferred embodiment of the disclosure, the MRN further includes a path switch request sending module 30, configured: after the judging module 10 judges whether the LIPA PDN connection of the UE needs to be released, to initiate a path switch request procedure for the UE, and to send a first path switch request message to a donor evolved NodeB, wherein the first path switch request message does not indicate a judgment result indicating whether the LIPA PDN connection of the UE needs to be released;
correspondingly, upon receiving the first path switch request message, the donor evolved NodeB is configured to send a second path switch request message to a mobility management entity; and
the mobility management entity is configured to send an S11 interface message to a serving gateway of the UE, wherein the S11 interface message is a modifying bearer request message or a creating session request message.

As a preferred embodiment of the disclosure, the MRN further includes a path switch request sending module 30, configured: when the judging module 10 judges whether the LIPA PDN connection of the UE needs to be released, to initiate a path switch request procedure for the UE, and to send an LIPA connection release judgment indication via a third path switch request message;
correspondingly, upon receiving the third path switch request message, if the third path switch request message includes the LIPA connection release judgment indication, the donor evolved NodeB is configured to send the third path switch request message to the mobility management entity via a fourth path switch request message; and
the mobility management entity is configured to judge according to the LIPA connection release judgment indication whether the LIPA PDN connection of the UE needs to be released.

Preferably, the L-GW is built in the MRN.

The judging module 10, the executing module 20, and the path switch request sending module 30 may all be implemented by a Central Processing Unit (CPU), a Micro Processing Unit (MCU), a Digital Signal Processor (DSP), or a Field-Programmable Gate Array (FPGA) of the MRN.

In conclusion, according to the embodiments of the disclosure, the problem of release of the LIPA connection in the scenario where the mobile relay supports the LIPA is solved, continuity of the LIPA connection of the MRN in the handover process is ensured in the scenario where the mobile relay supports the LIPA, thereby further ensuring the LIPA service continuity of the UE and improving quality of service and user experience for the user.

## Claims

1. A method for releasing a local Internet Protocol, IP, access connection, comprising:
judging, by a Mobile Relay Node, MRN, whether a Local IP Access Packet Data Network, LIPA PDN, connection of a User Equipment, UE, needs to be released; if the LIPA PDN connection needs to be released, then requesting a Local GateWay, L-GW, to release the LIPA PDN connection of the UE; and if the LIPA PDN connection does not need to be released, then stopping requesting the L-GW to release the LIPA PDN connection of the UE;
wherein the judging, by an MRN, whether an LIPA PDN connection of a UE needs to be released comprises:
judging, by the MRN, whether the UE is in a process of handover from a cell under an evolved NodeB to a cell under the MRN; if the UE is in the process of handover from a cell under an evolved NodeB to a cell under the MRN, then determining that the LIPA PDN connection of the UE needs to be released; otherwise, then determining that the LIPA PDN connection of the UE does not need to be released.

2. The method for releasing a local IP access connection according to claim 1, further comprising: after judging, by an MRN, whether an LIPA PDN connection of a UE needs to be released,
initiating, by the MRN, a path switch request procedure for the UE, and sending a first path switch request message to a donor evolved NodeB, wherein the first path switch request message does not indicate a judgment result indicating whether the LIPA PDN connection of the UE needs to be released;
after receiving the first path switch request message, sending, by the donor evolved NodeB, a second path switch request message to a mobility management entity; and
sending, by the mobility management entity, an S11 interface message to a serving gateway of the UE, wherein the S11 interface message is a modifying bearer request message or a creating session request message.

3. The method for releasing a local IP access connection according to claim 1, further comprising: after judging, by an MRN, whether an LIPA PDN connection of a UE needs to be released,
initiating, by the MRN, a path switch request procedure for the UE, and sending an LIPA connection release judgment indication via a third path switch request message;
after receiving the third path switch request message, if the third path switch request message comprises the LIPA connection release judgment indication, sending, by the donor evolved NodeB, the third path switch request message to a mobility management entity via a fourth path switch request message; and
judging, by the mobility management entity according to the LIPA connection release judgment indication, whether the LIPA PDN connection of the UE needs to be released.

4. The method for releasing a local IP access connection according to claim 3, wherein the judging, by the mobility management entity according to the LIPA connection release judgment indication, whether the LIPA PDN connection of the UE needs to be released comprises:
if the LIPA connection release judgment indication received by the mobility management entity indicates that the LIPA PDN connection of the UE needs to be released, then determining that the LIPA PDN connection of the UE needs to be released; and
if the LIPA connection release judgment indication received by the mobility management entity indicates that the LIPA PDN connection of the UE does not need to be released or if the mobility management entity does not receive the LIPA connection release judgment indication, then determining that the LIPA PDN connection of the UE does not need to be released.

5. The method for releasing a local IP access connection according to claim 3 or 4, further comprising: after judging, by the mobility management entity according to the LIPA connection release judgment indication, whether the LIPA PDN connection of the UE needs to be released,
if the UE has an unreleased LIPA PDN connection and the mobility management entity judges that the LIPA PDN connection of the UE needs to be released, then denying, by the mobility management entity, the path switch request, and detaching the UE; and
if the UE has an unreleased LIPA PDN connection and the mobility management entity judges that the LIPA PDN connection of the UE does not need to be released, then sending, by the mobility management entity, an S11 interface message to a serving gateway of the UE, wherein the S11 interface message is a modifying bearer request message or a creating session request message.

6. The method for releasing a local IP access connection according to any one of claims 1 to 4, wherein building the L-GW in the MRN.

7. A Mobile Relay Node, MRN, comprising:
a judging module (10), configured to judge whether a Local IP Access Packet Data Network, LIPA PDN, connection of a User Equipment, UE, needs to be released; and
an executing module (20), configured: when the judging module (10) judges that the LIPA PDN connection of the UE needs to be released, to request a Local GateWay, L-GW, to release the LIPA PDN connection of the UE; and when the judging module (10) judges that the LIPA PDN connection of the UE does not need to be released, to stop requesting the L-GW to release the LIPA PDN connection of the UE;
wherein the judging module (10) is further configured: to judge whether the UE is in a process of handover from a cell under an evolved NodeB to a cell under the MRN; if the UE is in the process of handover from a cell under an evolved NodeB to a cell under the MRN, to determine that the LIPA PDN connection of the UE needs to be released; otherwise, to determine that the LIPA PDN connection of the UE does not need to be released.

8. The MRN according to claim 7, further comprising: a path switch request sending module (30), configured: after the judging module (10) judges whether the LIPA PDN connection of the UE needs to be released, to initiate a path switch request procedure for the UE, and to send a first path switch request message to a donor evolved NodeB; wherein the first path switch request message does not indicate a judgment result indicating whether the LIPA PDN connection of the UE needs to be released;
correspondingly, after receiving the first path switch request message, the donor evolved NodeB is configured to send a second path switch request message to a mobility management entity; and
the mobility management entity is configured to send an S11 interface message to a serving gateway of the UE, wherein the S11 interface message is a modifying bearer request message or a creating session request message.

9. The MRN according to claim 7, further comprising: a path switch request sending module (30), configured: when the judging module judges whether the LIPA PDN connection of the UE needs to be released, to initiate a path switch request procedure for the UE, and to send an LIPA connection release judgment indication via a third path switch request message;
correspondingly, after receiving the third path switch request message, if the third path switch request message comprises the LIPA connection release judgment indication, the donor evolved NodeB is configured to send the third path switch request message to a mobility management entity via a fourth path switch request message; and
the mobility management entity is configured to judge, according to the LIPA connection release judgment indication, whether the LIPA PDN connection of the UE needs to be released.

10. The MRN according to any one of claims 7 to 9, wherein the L-GW is built in the MRN.

## Patentansprüche

1. Verfahren zum Freigeben einer lokalen Internetprotokoll IP Zugangsverbindung, umfassend:
Beurteilen durch einen Mobile -Relay -Knoten (MRN), ob eine lokale IP Zugangspaketdaten -Netzwerk (LIPA PDN) -Verbindung einer Benutzerausrüstung (UE) freigegeben sein muss, wenn die LIPA PDN -Verbindung freigegeben werden muss; daraufhin Anfordern eines lokalen GateWay (L-GW) zum Freigeben der LIPA PDN -Verbindung des UE; und wenn die LIPA PDN -Verbindung nicht freigegeben werden muss, dann Beenden des Anfordern des L-GW, um die LIPA PDN -Verbindung des UE freizugeben;
wobei die Beurteilung durch einen MRN, ob die LIPA PDN -Verbindung einer UE freizugeben ist, umfaßt:
Beurteilen durch den MRN, ob sich die UE in einem Prozeß der Übergabe von einer Zelle unter einem entwickelten Knoten B zu einer Zelle unter dem MRN befindet; falls die UE sich in einem Übergabeprozeß von einer Zelle unter einem entwickelten Knoten B zu einer Zelle unter dem MRN befindet, dann Bestimmen, dass die LIPA PDN -Verbindung der UE freizugeben ist, und wenn nicht, dann Bestimmen, dass die LIPA PDN -Verbindung der UE nicht freigegeben werden muss.

2. Verfahren zum Freigeben einer lokalen Internetprotokoll IP Zugangsverbindung nach Anspruch 1, ferner umfassend, dass nach Beurteilung durch einen MRN, ob eine LIPA PDN -Verbindung einer UE freigegeben werden muss, Einleiten durch den MRN einer Pfad -Schalter -Anfrage für die UE und Senden einer ersten Pfad -Schalter -Anfrage -Mitteilung eines Donator entwickelten Knotens B, wobei die erste Pfad -Schalter -Anfrage -Mitteilung kein Beurteilungsergebnis anzeigt, ob die LIPA PDN -Verbindung der UE freigegeben werden muss; nach dem Empfang der ersten Pfad -Schalter - Anfrage -Mitteilung Senden durch den Donator entwickelten Knoten B eine zweite Pfad -Schalter -Anfrage -Mitteilung an eine Mobilitäts -Verwaltungseinheit, und Senden durch die Mobilitäts -Verwaltungseinheit eine S11 Schnittstellen -Nachricht an einen bedienenden Gateway der UE, wobei die S11 Schnittstellen -Nachricht eine modifizierende Träger -Anforderungs - Nachricht oder eine Sitzungs -Erstellungs -Anforderungs -Nachricht ist.

3. Verfahren zum Freigeben einer lokalen Internetprotokoll IP Zugangsverbindung nach Anspruch 1, ferner **gekennzeichnet durch** die folgenden Schritte: Nach Beurteilung durch einen MRN, ob eine LIPA PDN -Verbindung eines UE freigegeben werden muss, Einleiten einer Pfad-Schalter-Aufforderungs-Prozedur für die UE und Senden eines LIPA -Verbindungs -Freigabe - Beurteilungs -Zeichen über eine dritte Pfad -Schalter -Aufforderungs - Nachricht; nach dem Empfangen der dritten Pfad -Schalter -Aufforderungs - Botschaft, wenn die dritte Pfad -Schalter -Aufforderungs -Nachricht das LIPA -Verbindungs -Freigabe -Beurteilungs -Zeichen aufweist, Senden durch den Donator entwickelten Knoten B die dritte Pfad -Schalter - Aufforderungs -Nachricht an ein Mobilitätsmanagement -System, und zwar über eine vierte Pfad -Schalter -Aufforderungs -Nachricht, und Beurteilen durch das Mobilitätsmanagement -System gemäß dem LIPA -Verbindungs - Freigabe -Beurteilungs -Zeichen, ob die LIPA PDN Verbindung der UE freizugeben ist.

4. Verfahren zum Freigeben einer lokalen Internetprotokoll IP Zugangsverbindung nach Anspruch 3, **dadurch gekennzeichnet, dass** die Beurteilung durch das Mobilitäts -Management -System gemäß dem LIPA -Verbindungs - Freigabe -Beurteilungs -Zeichen, ob die LIPA PDN Verbindung der UE freizugeben ist, folgendes umfaßt: Wenn das LIPA Verbindungs -Freigabe - Beurteilungs -Zeichen, das von dem Mobilitätsmanagment -System empfangen wird, anzeigt, dass die LIPA PDN Verbindung der UE freizugeben ist, dann Bestimmen, dass die LIPA PDN Verbindung der UE freizugeben ist, und wenn das LIPA Verbindungs -Freigabe -Beurteilungs -Zeichen, das an dem Mobilitäts -Management -System erhalten wird, anzeigt, dass die LIPA PDN Verbindung der UE nicht freizugeben ist oder wenn das Mobilitäts - Management -System nicht das LIPA Verbindungs -Freigabe -Beurteilungs -Zeichen empfängt, dann Bestimmen, dass die LIPA PDN Verbindung der UE nicht freigegeben werden muss.

5. Verfahren zum Freigeben einer lokalen Internetprotokoll IP Zugangsverbindung gemäß Anspruch 3 oder 4, ferner **dadurch gekennzeichnet, dass** nach der Beurteilung durch das Mobilitäts -Management -System gemäß dem LIPA Verbindungs -Freigabe -Beurteilungs -Zeichen, ob die LIPA PDN Verbindung freizugeben ist, wenn die UE eine nicht freigegebene LIPA PDN Verbindung hat und das Mobilitäts -Management -System beurteilt, dass die LIPA PDN Verbindung der UE freigegeben werden muss, dann Verneinen durch das Mobilitäts -Management -System die Pfad -Schalter - Aufforderung und Abschalten der UE; und wenn die UE eine nicht freigegebene LIPA PDN Verbindung hat und das Mobilitäts -Management -System beurteilt, dass die LIPA PDN Verbindung der UE nicht freigegeben werden muss, dann Senden durch das Mobilitäts -Management -System eine S11 - Schnittstellen -Nachricht an einen Dienst -Gateway der UE, wobei die S11 - Schnittstellen -Nachricht eine modifizierende Träger -Aufforderungs - Nachricht oder eine Sitzungs -Anforderungs -Erstellungs -Nachricht ist.

6. Verfahren zum Freigeben einer lokalen Internetprotokoll IP Zugangsverbindung nach einem der Ansprüche 1 bis 4, wobei das L-GW in dem MRN aufgebaut wird.

7. Mobiler Relay Knoten MRN, umfassend einen Beurteilungsmodul (10), der so gebaut ist, dass beurteilt wird, ob ein lokales Zugangspaket -Datennetzwerk LIPA PDN mit Anschluß eines Benutzergerätes UE freigegeben werden muss; und einen Ausführungsmodul (20), der wie folgt gebaut ist: Wenn der Beurteilungsmodul (10) beurteilt, dass die LIPA PDN Verbindung der UE freizugeben ist, ein lokaler GateWay L-GW angefordert wird, um die LIPA PDN Verbindung der UE freizugeben; und wenn der Beurteilungsmodul (10) beurteilt, dass die LIPA PDN Verbindung der Benutzerausrüstung UE nicht freizugeben ist, die Forderung nach dem L-GW gestoppt wird, um die LIPA PDN Verbindung der UE freizugeben; wobei der Beurteilungsmodul (10) auch so gebaut ist, dass beurteilt wird, ob sich die UE in einem Übergabevorgang von einer Zelle oder einem entwickelten Knoten B zu einer Zelle unter dem MRN befindet, um festzustellen, dass die LIPA PDN Verbindung der UE freigegeben werden muss, anderenfalls um zu bestimmen, dass die LIPA PDN Verbindung der UE nicht freigegeben werden muss.

8. Mobiler Relay Knoten MRN nach Anspruch 7, ferner umfassend eine Pfad - Schalter -Aufforderungs -Sendemodul (30), der so gebaut ist, dass nachdem der Beurteilungsmodul (10) beurteilt, ob die LIPA PDN Verbindung der UE freigegeben werden muss, einen Pfad -Schalter -Aufforderungs -Prozedur der UE initiiert wird, um eine erste Pfad -Schalter -Aufforderungs -Nachricht an einen Donator entwickelten Knoten B zu senden, wobei die erste Pfad - Schalter -Aufforderungs -Nachricht kein Beurteilungsergebnis anzeigt derart, dass die LIPA PDN Verbindung der UE freigegeben werden muss; entsprechend nach Empfang der ersten Pfad -Schalter -Aufforderung - Nachricht wird der Donator entwickelten Knoten B so gestaltet, dass eine zweite Pfad -Schalter -Aufforderungs -Nachricht ein Mobilitäts - Management -System geschickt wird; und das Mobilitäts -Management - System ist so gestaltet, dass eine S11 Schnittstellen -Nachricht an einen Dienst -Gateway der UE gesendet wird, wobei die S11 Schnittstellen - Nachricht eine modifizierende Träger -Anfrage -Nachricht oder eine Sitzung bewirkende Anfrage -Nachricht ist.

9. MRN nach Anspruch 7, ferner **gekennzeichnet durch** einen Pfad -Schalter - Aufforderungs -Sendemodul (30), der so gebaut ist, dass dann, wenn der Beurteilungsmodul beurteilt, ob die LIPA PDN Verbindung der UE freigegeben werden muss, eine Pfad -Schalter -Aufgabe -Prozedur für die UE initiiert und über eine dritte Pfad -Schalter -Aufforderungs -Nachricht ein LIPA Verbindungs -Freigabe -Beurteilungszeichen gesendet wird; entsprechend nach dem Empfang der dritten Pfad -Schalter -Aufforderungs -Nachricht, wenn die dritte Pfad -Schalter -Aufforderungs -Nachricht das LIPA Verbindungs -Freigabe -Beurteilungszeichen aufweist, der Donator entwickelte Knoten B gebildet wird, um die dritte Pfad -Schalter -Aufforderungs - Nachricht über eine vierte Pfad -Schalter -Aufforderungs -Nachricht an ein Mobilitäts -Management -System zu senden, und das Mobilitäts - Management -System dazu dient zu beurteilen, gemäß der LIPA Verbindungs -Freigabe -Beurteilungszeichen, ob die LIPA PDN Verbindung der UE freigegeben werden muss.

10. MRN nach einem der Ansprüche 7 bis 9, **dadurch gekennzeichnet, dass** der L-GW in den MRN eingebaut ist.

## Revendications

1. Procédé de libération d'une connexion d'accès à un protocole Internet, IP, local, comprenant :
le fait de juger, par un noeud de relais mobile, MRN, si une connexion de réseau de données par paquet d'accès à un IP local, LIPA PDN, d'un équipement utilisateur, UE, a besoin d'être libérée ; si la connexion de LIPA PDN a besoin d'être libérée, alors la demande à une passerelle locale, L-GW, de libérer la connexion de LIPA PDN de l'UE ; et si la connexion de LIPA PDN n'a pas besoin d'être libérée, alors l'arrêt de la demande à la L-GW de libérer la connexion de LIPA PDN de l'UE ;
dans lequel le fait de juger, par un MRN, si une connexion de LIPA PDN d'un UE a besoin d'être libérée comprend :
le fait de juger, par le MRN, si l'UE est dans un processus de transfert d'une cellule sous un noeudB évolué à une cellule sous le MRN ; si l'UE est dans le processus de transfert d'une cellule sous un noeudB évolué à une cellule sous le MRN, alors le fait de déterminer que la connexion de LIPA PDN de l'UE a besoin d'être libérée ; sinon, le fait de déterminer que la connexion de LIPA PDN de l'UE n'a pas besoin d'être libérée.

2. Procédé de libération d'une connexion d'accès à un IP local selon la revendication 1, comprenant en outre : après le fait de juger, par un MRN, si une connexion de LIPA PDN d'un UE a besoin d'être libérée,
l'initiation, par le MRN, d'une procédure de demande de commutation de chemin pour l'UE, et l'envoi d'un premier message de demande de commutation de chemin à un noeudB évolué donneur, dans lequel le premier message de demande de commutation de chemin n'indique pas un résultat de jugement indiquant si la connexion de LIPA PDN de l'UE a besoin d'être libérée ;
après réception du premier message de demande de commutation de chemin, l'envoi, par le noeudB évolué donneur, d'un deuxième message de demande de commutation de chemin à une entité de gestion de mobilité ; et
l'envoi, par l'entité de gestion de mobilité, d'un message d'interface S11 à une passerelle de desserte de l'UE, dans lequel le message d'interface S11 est un message de demande de support de modification ou un message de demande de session de création.

3. Procédé de libération d'une connexion d'accès à un IP local selon la revendication 1, comprenant en outre : après le fait de juger, par un MRN, si une connexion de LIPA PDN d'un UE a besoin d'être libérée,
l'initiation, par le MRN, d'une procédure de demande de commutation de chemin pour l'UE, et l'envoi d'une indication de jugement de libération de connexion de LIPA via un troisième message de demande de commutation de chemin ;
après réception du troisième message de demande de commutation de chemin, si le troisième message de demande de commutation de chemin comprend l'indication de jugement de libération de connexion de LIPA, l'envoi, par le noeudB évolué donneur, du troisième message de demande de commutation de chemin à une entité de gestion de mobilité via un quatrième message de demande de commutation de chemin ; et
le fait de juger, par l'entité de gestion de mobilité selon l'indication de jugement de libération de connexion de LIPA, si la connexion de LIPA PDN de l'UE a besoin d'être libérée.

4. Procédé de libération d'une connexion d'accès à un IP local selon la revendication 3, dans lequel le fait de juger, par l'entité de gestion de mobilité selon l'indication de jugement de libération de connexion de LIPA, si la connexion de LIPA PDN de l'UE a besoin d'être libérée comprend :
si l'indication de jugement de libération de connexion de LIPA reçue par l'entité de gestion de mobilité indique que la connexion de LIPA PDN de l'UE a besoin d'être libérée, alors le fait de déterminer que la connexion de LIPA PDN de l'UE a besoin d'être libérée ; et
si l'indication de jugement de libération de connexion de LIPA reçue par l'entité de gestion de mobilité indique que la connexion de LIPA PDN de l'UE n'a pas besoin d'être libérée ou si l'entité de gestion de mobilité ne reçoit pas l'indication de jugement de libération de connexion de LIPA, alors le fait de déterminer que la connexion de LIPA PDN de l'UE n'a pas besoin d'être libérée.

5. Procédé de libération d'une connexion d'accès à un IP local selon la revendication 3 ou 4, comprenant en outre : après le fait de juger, par l'entité de gestion de mobilité selon l'indication de jugement de libération de connexion de LIPA, si la connexion de LIPA PDN de l'UE a besoin d'être libérée,
si l'UE a une connexion de LIPA PDN non libérée et que l'entité de gestion de mobilité juge que la connexion de LIPA PDN de l'UE a besoin d'être libérée, alors le refus, par l'entité de gestion de mobilité, de la demande de commutation de paquet, et le détachement de l'UE ; et
si l'UE a une connexion de LIPA PDN non libérée et que l'entité de gestion de mobilité juge que la connexion de LIPA PDN de l'UE n'a pas besoin d'être libérée, alors l'envoi, par l'entité de gestion de mobilité, d'un message d'interface S11 à une passerelle de desserte de l'UE, dans lequel le message d'interface S11 est un message de demande de support de modification ou un message de demande de session de création.

6. Procédé de libération d'une connexion d'accès à un IP local selon l'une quelconque des revendications 1 à 4, dans lequel on construit la L-GW dans le MRN.

7. Noeud de relais mobile, MRN, comprenant :
un module de jugement (10), configuré pour juger si une connexion de réseau de données par paquet d'accès à un IP local, LIPA PDN, d'un équipement utilisateur, UE, a besoin d'être libérée ; et
un module d'exécution (20), configuré : lorsque le module de jugement (10) juge que la connexion de LIPA PDN de l'UE a besoin d'être libérée, pour demander à une passerelle locale, L-GW, de libérer la connexion de LIPA PDN de l'UE ; et lorsque le module de jugement (10) juge que la connexion de LIPA PDN de l'UE n'a pas besoin d'être libérée, pour arrêter la demande à la L-GW de libérer la connexion de LIPA PDN de l'UE ;
dans lequel le module de jugement (10) est en outre configuré : pour juger si l'UE est dans un processus de transfert d'une cellule sous un noeudB évolué à une cellule sous le MRN ; si l'UE est dans le processus de transfert d'une cellule sous un noeudB évolué à une cellule sous le MRN, pour déterminer que la connexion de LIPA PDN de l'UE a besoin d'être libérée ; sinon, pour déterminer que la connexion de LIPA PDN de l'UE n'a pas besoin d'être libérée.

8. MRN selon la revendication 7, comprenant en outre : un module d'envoi de demande de commutation de chemin (30), configuré : après que le module de jugement (10) juge si la connexion de LIPA PDN de l'UE a besoin d'être libérée, pour initier une procédure de demande de commutation de chemin pour l'UE, et pour envoyer un premier message de demande de commutation de chemin à un noeudB évolué donneur ; dans lequel le premier message de demande de commutation de chemin n'indique pas un résultat de jugement indiquant si la connexion de LIPA PDN de l'UE a besoin d'être libérée ;
en correspondance, après réception du premier message de demande de commutation de chemin, le noeudB évolué donneur est configuré pour envoyer un deuxième message de demande de commutation de chemin à une entité de gestion de mobilité ; et
l'entité de gestion de mobilité est configurée pour envoyer un message d'interface S11 à une passerelle de desserte de l'UE, dans lequel le message d'interface S11 est un message de demande de détenteur de modification ou un message de demande de session de création.

9. MRN selon la revendication 7, comprenant en outre : un module d'envoi de demande de commutation de chemin (30), configuré : lorsque le module de jugement juge si la connexion de LIPA PDN de l'UE a besoin d'être libérée, pour initier une procédure de demande de commutation de chemin pour l'UE, et pour envoyer une indication de jugement de libération de connexion de LIPA via un troisième message de demande de commutation de chemin ;
en correspondance, après réception du troisième message de demande de commutation de chemin, si le troisième message de demande de commutation de chemin comprend l'indication de jugement de libération de connexion de LIPA, le noeudB évolué donneur est configuré pour envoyer le troisième message de demande de commutation de chemin à une entité de gestion de mobilité via un quatrième message de demande de commutation de chemin ; et
l'entité de gestion de mobilité est configurée pour juger, selon l'indication de jugement de libération de connexion de LIPA, si la connexion de LIPA PDN de l'UE a besoin d'être libérée.

10. MRN selon l'une quelconque des revendications 7 à 9, dans lequel la L-GW est construite dans le MRN.
